(19) Europäisches Patentamt
European Patent Office
Office européen des brevets

(11) Publication number: 0 284 996 A2

(12) # EUROPEAN PATENT APPLICATION

(21) Application number: 88104700.5

(51) Int. Cl.4: C09D 5/03 , C09D 3/78

(22) Date of filing: 24.03.88

(30) Priority: 30.03.87 US 31719

(43) Date of publication of application:
05.10.88 Bulletin 88/40

(84) Designated Contracting States:
DE FR GB IT SE

(71) Applicant: PPG INDUSTRIES, INC.
One PPG Place
Pittsburgh Pennsylvania 15272(US)

(72) Inventor: Youlton, Anthony Charles
364 Iroquois Avenue
Pittsburgh Pa. 15237(US)
Inventor: Lauer, Andrew John
264 Fairhaven Drive
Lower Burrell Pa. 15068(US)
Inventor: Stoneberg, Richart Lawrence
115 Richmond Circle
Pittsburgh Pa. 15237(US)
Inventor: Weissberg, Alan Beril
769 South Linden Avenue
Pittsburgh Pa. 15208(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Powder coating composition.**

(57) A powder coating composition contains a polymeric binder and greater than 40 percent by weight of a coalescing additive component containing at least one coalescing agent which is a solid at ambient temperature, the percentage based on the total weight of the binder and the coalescing component of the composition. The coalescing additive component is adapted to promote flow and fusion of the binder into a substantially coalesced film with the application of heat and be substantially volatilized from the film during coalescence.

EP 0 284 996 A2

# POWDER COATING COMPOSITION

## Background of the Invention

The present invention relates to powder coating compositions.

Heretofore, formulation of powder coating compositions from high molecular weight polymers has been difficult because such polymers do not readily flow and coalesce to yield an acceptable film. If enough coalescence does occur such that a continuous film is formed, the appearance is generally unacceptable since typically the film is rough or resembles that of an orange-peel.

Fluorocarbon based powder coating compositions, particularly those based on polyvinylidene fluoride, are especially difficult to formulate for the reasons given above. There is a need, therefore, for a way in which to formulate suitable powder coating compositions from polymers which do not readily flow and coalesce, particularly fluorocarbon polymers.

## Summary of the Invention

In accordance with the present invention there is provided a powder coating composition comprising a polymeric binder and greater than 40 percent by weight of a coalescing additive component comprising at least one coalescing agent which is a solid at ambient temperature. The coalescing additive component is adapted to promote flow and fusion of the binder into a substantially coalesced film with the application of heat and to be substantially volatilized from the film during coalescence. The percentage of the coalescing additive component is based on the total weight of the binder and the coalescing additive component of the composition.

## Detailed Description of the Invention

The powder coating composition of the present invention, broadly stated, comprises a polymeric binder and greater than 40 percent by weight of a coalescing additive component, the percentage being based on the total weight of the binder and the coalescing component of the composition. The polymeric binder of the claimed powder coating compositions can be selected from a wide variety of materials. Examples of suitable polymeric binders include fluorocarbon polymers, polyesters, oil modified polyesters which are typically termed alkyds, cellulose esters such as nitrocellulose and cellulose acetate butyrate, acrylic polymers, and other vinyl polymers such as polyamides and polyvinyl chloride polymers. The preferred polymeric binder is a fluorocarbon polymer.

The polyvinyl chloride polymers which are suitable for use herein can be homopolymers or copolymers of vinyl chloride. The mixed polymerization or copolymerization components can comprise in addition vinyl esters such as vinyl acetate, acrylic acid esters and vinylidene chloride. The polymers and/or mixed polymers can be prepared by known processes such as suspension, emulsion, or block polymerization.

Cellulose acetate butyrate is representative of the cellulose esters. Various types of cellulose acetate butyrate are available with various percentages of the hydroxyl groups in a glucose unit esterified with butyric acid or acetic acid. One useful type has 16 to 40 percent of the hydroxyl groups in a glucose unit esterified with butyric acid and from 10 to 30 percent of such hydroxyl groups esterified by acetic acid.

Several different fluorocarbon polymers are useful in the present invention. Such polymers include the polyvinyl fluorides, polyvinylidene fluorides, vinyl fluoride copolymers and vinylidene fluoride copolymers. The preferred fluorocarbon polymer binder is polyvinylidene fluoride. The copolymers include at least 75 percent by weight preferably 90 percent or more of vinyl or vinylidene fluoride units. Examples of monomers to be copolymerized with vinyl fluoride or vinylidene fluoride are ethylene, propylene, isobutylene styrene, vinyl chloride, vinylidiene chloride, difluorochloroethylene, tetrafluoroethylene, trifluoropropylene, hexafluoropropylene, vinyl formate, vinyl acetate, vinyl propionate, vinyl butyrate, acrylic acid and its salts, methyl methacrylate, allyl methacrylate, acrylonitrile, methacrylonitrile, N-butoxymethyl acrylamide, allyl acetate and isopropanol acetate.

In a preferred embodiment of the claimed invention, the claimed coating composition additionally comprises at least one adjuvant resin which is different from the binder and is adapted to modify the properties of the binder. The adjuvant resin can be selected from a wide variety of polymeric materials

which are suitable as modifiers for the binder resin. For example, suitable modifiers include acrylic resins, polyester resins, such as polyester polyols, epoxy resins and aminoplast resins such as melamine-formaldehyde condensates.

The particular adjuvant resin chosen depends upon the properties which are desired. If one desires a softer, more flexible film, one can select for example, a polyester resin whereas if hardness and exterior durability are desirable, one can select for example, an aminoplast resin, acrylic resin or epoxy resin. Mixtures of the adjuvants can also be utilized. For example, in one embodiment, the binder can be a fluorocarbon polymer and the adjuvant can be a mixture of an acrylic resin and an epoxy resin. In a preferred embodiment of the claimed invention the binder is a fluorocarbon polymer and the adjuvant is an acrylic resin. The adjuvants mentioned above are described in detail below.

The acrylic resin can be thermoplastic or thermosetting. In one embodiment, the thermoplastic resins are preferred for use herein. Suitable thermoplastic acrylic resins include polymers and copolymers of acrylic acid or methacrylic acid esters, for example, polymers and copolymers of esters formed by the reaction of acrylic or methacrylic acid with suitable alcohols such as methyl alcohol, ethyl alcohol, propyl alcohol, butyl alcohol and 2-ethylhexyl alcohol. One preferred thermoplastic acrylic resin is a copolymer of methyl methacrylate and ethyl acrylate. Suitable thermosetting acrylic resins include polymers and copolymers of acrylic monomers containing active hydrogens such as the hydroxyalkyl esters of ethylenically unsaturated carboxylic acids and at least one other copolymerizable ethylenically unsaturated monomer. For example, a suitable thermosetting resin is that prepared from 2-hydroxyethyl acrylate, acrylic acid, N-butoxymethyl acrylamide and another copolymerizable ethylenically unsaturated monomer such as styrene, vinyl toluene, methyl styrene or ethyl styrene. When the binder is a fluorocarbon polymer the amount of acrylic resin typically ranges from about 15 percent by weight to about 95 percent by weight, preferably from about 15 percent to about 60 percent by weight, the percentages based on the total weight of the fluorocarbon and acrylic. The amount of fluorocarbon polymer typically ranges from about 5 percent to about 85 percent by weight, preferably from about 40 percent to about 85 percent by weight, the percentages based on the total weight of fluorocarbon and acrylic.

Polyester resins are generally formed by the esterification of polyols with polycarboxylic acids or acid anhydrides. The polyols conventionally employed include alkylene glycols, such as ethylene glycol, propylene glycol, butylene glycol and neopentyl glycol, and other glycols such as hydrogenated bisphenol A, cyclohexanedimethanol, caprolactone-diol reaction products, hydroxyalkylated bisphenols, polyether glycols, e.g., poly(oxytetramethylene) glycol, and similar type compounds. Other diols of various types and polyols of higher functionality can also be used. Such higher polyols include trimethylolpropane, trimethylolethane, pentaerythritol and higher molecular weight polyols, such as obtained by the reaction product of ethylene oxide and trimethylolpropane and various hydrolyzed epoxide resin.

Suitable carboxylic acids used in the reaction with the above-described polyols include phthalic, isophthalic, terephthalic, tetrahydrophthalic, hexahydrophthalic, adipic, azelaic, sebacic, maleic, glutaric, chlorendic, tetrachlorophthalic, maleic, fumaric, itaconic, malonic, 2-methylsuccinic , 3,3-diethylglutaric, 2,2-dimethylsuccinic acid and trimellitic acid. Anhydrides of these acids where they exist can also be employed and are encompassed by the term "carboxylic acid".

The epoxide resins are those compounds having a 1,2-epoxy group, i.e.,

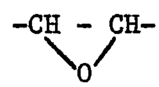

present in the molecule. Hydroxyl groups may also be present and often are. Polyepoxides contain more than one 1,2-epoxy group per molecule.

One useful class of polyepoxides comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e., bisphenol A; bis(4-hydroxyphenyl)-1,1-isobutane, 4,4-dihydroxybenzophenone; bis(4-hydroxyphenyl-1,1-ethane; bis(2-hydroxynaphenyl)-methane; and 1,5-hydroxynaphthalene. One very common polyepoxide is a polyglycidyl ether of a polyphenol, such as bisphenol A.

Another class of epoxy resins are the polyglycidyl ethers of polyhydric alcohols. These commands may be derived from such polyhydric alcohols as ethylene glycol, diethylene glycol, triethylene glycol, 1,2-propylene glycol, 1,4-butylene glycol, 1,5-pentanediol, 1,2,6-hexane-triol, glycerol, trimethylolpropane, and bis(4-hydroxycyclohexyl)-2,2-propane.

The epoxy resins can be defunctionalized by carboxylic acids, alcohol, water, phenols, mercaptans, or other active hydrogen-containing compounds to give hydroxyl-containing polymers which are also useful herein.

Aminoplast resins are based on the addition products of formaldehyde, with an amino-or amido-group carrying substance. Condensation products obtained from the reaction of alcohols and formaldehyde with melamine, urea or benzoguanamine are most common and preferred herein. These condensation products can be monomeric or polymeric. Condensation products of other amines and amides can also be employed, for example, aldehyde condensates of triazines, diazines, triazoles, guanadines, guanamines and alkyl-and aryl-substituted derivatives of such compounds, including alkyl-and aryl-substituted ureas and alkyl-and aryl-substituted melamines. Some examples of such compounds are N,N'-dimethyl urea, benzourea, dicyandimide, formoguanamine, acetoguanamine, glycoluril, ammelin, 2-chloro-4,6-diamino-1,3,5-triazine, 6-methyl-2,4-diamino,1,3,5-triazine, 3,5-diaminotriazole, triaminoprimidine, 2-mercapto-4,6-diamino-pyrimidine, 3,4,6-tris(ethylamino)-1,3,5-triazine, and the like.

While the aldehyde employed is most often formaldehyde, other similar condensation products can be made from other aldehydes, such as acetaldehyde, crotonaldehyde, acrolein, benzaldehyde, furfural, glyoxal and the like.

The aminoplast resins contain methylol or similar alkylol groups, and in most instances at least a portion of these alkylol groups are etherified by a reaction with an alcohol. Any monohydric alcohol can be employed for this purpose, including such alcohols as methanol, ethanol, propanol, butanol, pentanol, hexanol, heptanol, and others, as well as benzyl alcohol and other aromatic alcohols, cyclic alcohol such as cyclohexanol, monoethers, of glycols such as those available from Union Carbide Corporation under the trademarks CELLOSOLVE and CARBITOL, and halogen-substituted or other substituted alcohols, such as 3-chloropropanol and butoxyethanol. The preferred aminoplast resins are substantially alkylated with methanol or butanol.

The coalescing additive component is present in the claimed powder coating composition in an amount which is greater than 40 percent by weight, the percentage based on the total weight of the binder and the coalescing additive component of the composition. The coalescing additive component comprises at least one coalescing agent which is a solid at ambient temperature. The coalescing additive component is adapted to promote flow and fusion of the binder into a substantially coalesced film with the application of heat and to be substantially volatilized from the film during coalescence. For the purpose of this application, the term coalesced is defined to mean that the particles of the powder coating composition at least are in contact with each other and are beginning to melt and fuse together. A substantially coalesced film is one wherein the binder is essentially fused. By "substantially volatilized" is meant that substantially all of the coalescing additive component has passed into the vapor state. The amount of coalescing additive component is preferably at least 50 percent by weight and more preferably ranges from about 60 percent by weight to about 90 percent by weight, the percentages based on the total weight of the binder and the coalescing component of the composition.

It should be understood that the coalescing component can be a single coalescing agent or a mixture of coalescing agents, so long as at least one of the coalescing agents of the coalescing component is a solid at ambient temperature. Examples of suitable coalescing agents include dimethyl isophthalate, benzoin, sucrose benzoate and cyclohexyl phthalate. Preferably dimethyl isophthalate is utilized.

The coalescing additive component, as has been stated above, is adapted to promote flow and fusion of the coating composition binder into a substantially coalesced film. The resultant coating composition is stable in powder form; that is, it does not cake or aggregate into clumps. In addition the powder coating composition is preferably friable, that is, it is capable of being pulverized by grinding at ambient temperature.

The powder coating compositions of the present invention can be prepared by first melt blending the binder, the coalescing additive component and any adjuvant resin which is utilized. This melt blending step can be conducted in any apparatus known to those skilled in the art. When it is desired to prepare a pigmented powder coating composition it is preferred to melt blend the solid coalescing agent into a pigment paste which can contain volatile organic solvents. These can be readily removed by vacuum stripping prior to solidification of the composition for grinding.

It is preferred to carry out the melt blending step at a temperature which is high enough to provide sufficient flow while the composition is molten but below the boiling point of the coalescing additive component. Also the temperature should not be so high that discoloration of the coating composition occurs. The actual temperature will vary widely depending upon the particular coalescing additive component selected.

The molten composition is next cooled until it solidifies and then it is pulverized by grinding to a

desired particle size. The particular particle size is selected upon the ultimate end use and mode of application.

The powder coating compositions of the present invention can be prepared in a batch, continuous or semi-continuous manner. They can be clear or pigmented, the particular choice depending upon the final appearance which is desired. Several different pigments can be used in the coating compositions of the present invention. Inorganic pigments which are useful include titanium dioxide, powdered aluminum, silica, iron oxides, talc, mica, clay, zinc oxide, zinc sulfide, zirconium oxide, carbon black and barium sulfate. Organic pigments can also be used if desired.

The powder coating compositions can be applied to a surface to be coated by any means known to those skilled in the art. For example the powder particles can be applied by electrostatic spray or by fluidized bed techniques.

In addition to pigment the coating compositions can contain other components to enhance various properties of the compositions such as pigment stabilizer, air release agent, adhesion promoting agents, colorants and the like.

The powder coating compositions of the present invention are particularly advantageous in that they can be prepared from polymers which do not readily flow and coalesce and they exhibit physical properties which are comparable to liquid coating compositions prepared from the same type of polymer.

The following examples are illustrative of the present invention and are not intended to limit it to their details.

## Example I

This example illustrates the importance of the level of coalescing additive component in the claimed powder coating composition.

Several clear powder coating compositions were prepared at various levels of coalescing additive component. The compositions were applied, baked and evaluated for film formation.

| | Compositions (Parts by Weight) | | | | |
|---|---|---|---|---|---|
| Ingredients | A | B | C | D | E |
| KYNAR 500[1] | 455 | 390 | 325 | 260 | 195 |
| dimethylisophthalate | 195 | 260 | 325 | 390 | 455 |
| Percent Coalescing component | 30% | 40% | 50% | 60% | 70% |

(1) This is polyvinylidene fluoride which is commercially available from Pennwalt Corporation.

The KYNAR 500 was dispersed in the dimethyl isophthalate in a Buss single screw extruder. The ingredients were hand fed into the extruder. The oil temperature of the extruder was 110°C to 120°C and the minimum speed was at least about 25 RPM. The compositions exited the extruder in a powdered, flaked form. Compositions A and B were further ground in a Warring blender while C, D, and E were crushed by hand using a rubber mallet. All of the compositions were sieved through a size 100 mesh.

Each powder coating composition prepared above was sprayed with a VOLSTATIC personal solid spray powder gun onto three different types of substrates. The first type was an aluminum panel having a chrome phosphate pretreatment which panel was available from Amchem Company as AMCHEM™ 407/47. The second type of substrate was also an AMCHEM™ aluminum panel except that it had been additionally primed with a thermoplastic fluoropolymer based coating composition commercially available from PPG Industries, Inc. as UC 51742. This primer was baked for 10 minutes at 350°F (177°C). The third type of substrate was the same as the second type except that it had been additionally topcoated with a red, pigmented fluoropolymer based coating composition commercially available from PPG Industries, Inc. as UC 40597 which was baked for 10 minutes at 475°F(246°C).

Each panel having the applied powder coating composition was baked for 10 minutes at 350°F

(177°C). Each of the panels was evaluated for the amount of coalescence.
The results are set out below.

| | | Panel Appearance | | |
|---|---|---|---|---|
| Composition | Percent Coalescing Component | Substrate Type 1 | Substrate Type 2 | Substrate Type 3 |
| A | 30 | poor coalescence, coating resembles snow/frost | poor coalescence, coating resembles snow/frost | poor coalescence, coating resembles snow/frost |
| B | 40 | poor coalescence, but not as severe as 30 percent level | poor coalescence, but not as severe as 30 percent level | poor coalescence, but not as severe as 30 percent level |
| C | 50 | smooth film with pinholing | smooth film | rough non-continuous film but coalesced |
| D | 60 | smooth film, no pinholing | smooth film, no pinholing | smooth film, slight pinholing |
| E | 70 | smooth film | smooth film | smooth film |

As is demonstrated by the data above, at 40 percent of coalescing component the coalescence is poor but not as severe as the 30 percent level. At 50 percent, smooth film formation occurs, although on the substrate type 3 the appearance was rough and the film was not completely continuous, although coalesced. Thus, greater than 40 percent by weight of coalescing additive component based on the total weight of the resinous binder and coalescing additive is required.

## Example II

This example illustrates the preparation and evaluation of a pigmented powder coating composition according to the claimed invention.

| | Ingredients | Parts by Weight (grams) |
|---|---|---|
| Charge I | Pigment Paste[2] | 421.8 |
| | dimethylisophthalate | 1333.6 |
| Charge II | KYNAR 500 | 280.0 |

(2) This pigment paste was prepared in the following manner:

| Ingredients | Parts by Weight (grams) |
|---|---|
| ACRYLOID B-44[a] | 1500.0 |
| jet black pigment | 580.0 |
| red iron oxide | 16.0 |
| shepherd brown pigment no. 19[b] | 196.0 |
| titanium dioxide[c] | 8.0 |

(a) Thermoplastic acrylic resin (40 percent solids in toluene) which is a methyl methacrylate ethyl acrylate copolymer and is commercially available from Rohm and Haas Company.

(b) Commercially available from Shepherd.

(c) Commercially available from E. I. duPont deNemours Company as R-960.

The pigment paste was prepared by combining the ingredients together in the order listed and grinding with ceramic beads to a Hegman grind of 5.5 to 6.0.

The powder coating composition was prepared in the following manner. A suitably equipped reactor vessel was charged with (I) and heated to about 148°C for 45 minutes to melt the solid dimethylisophthalate. The reaction mixture was then vacuum stripped for 30 minutes to remove the toluene contributed by the ACRYLOID B-44. Charge (II) was then added and the resultant product was held at this temperature for 10 minutes prior to being poured out into containers. The resultant product had a total solids content determined at 150°C for two hours at 99.8 percent.

The resultant solid product was then processed into a powder. The large clump size solid was first ground in a Wellex blender to produce gravel size pellets. These pellets were then ground in a hammermill to produce a powder.

The powder coating composition prepared above was sprayed with a VOLSTATIC personal solid spray powder gun onto an AMCHEM™ 407/47 panel and baked for 10 minutes at 475°F (246°C). The coalesced film was evaluated for gloss, pencil hardness and direct and reverse impact resistance.

Pencil hardness is a measure of the resistance of the coating to a pencil indentor. The hardness scale ranges from 4B which indicates a soft coating to 10H which indicates a hard coating: 4B, 3B, 2B, B, HB, F, H, 2H, 3H . . . up to 10H.

Direct and reverse impact resistance were determined according to AAMA 605.2-85, Section 7.5.

Gloss was determined with a glossmeter at 60°.

The coalesced film had a dry film thickness of 0.7 to 0.8 mils; gloss of 28 to 30; pencil hardness of F; direct impact of greater than 120 inch pounds and reverse impact of greater than 120 inch pounds (the substrate fractured but the coating did not). The coalesced film also withstood 100 back and forth rubs with a cloth soaked in methyl ethyl ketone without being affected.

## EXAMPLE III

This Example illustrates the preparation of a powder coating composition utilizing a poly(methyl methacrylate) film former and 75 percent by weight of solid coalescing agent, the percentage based on the total weight of film former and coalescing agent.

| Ingredients | Parts by Weight (grams) |
|---|---|
| PLEXIGLAS resin[3] | 125 |
| dimethylisophthalate | 375 |

(3) This is a thermoplastic poly(methyl methacrylate) resin which is commercially available from Rohm and Haas Co. under the trade designation PLEXIGLAS VS 100.

A suitable equipped reactor vessel was charged with the ingredients listed above and heated for 5 hours at 250°F (125°C) to melt the ingredients. The molten mixture was then solidified by pouring it onto an aluminum foil sheet which was cooled by a bath of dry ice placed beneath the sheet. When the composition had solidified it was crushed by hand into large gravel size pellets. These pellets were then ground in a hammermill to produce a powder.

The powder coating composition prepared above was sprayed with a VOLSTATIC personal solid spray powder gun onto an AMCHEM™ 407/47 panel and baked for 20 minutes at 300°F (149°C). The resultant film was fully coalesced, clear and glossy, although runs and sags were evident.

The control was a powder composition prepared with PLEXIGLAS resin alone and no coalescing additive component. For the control composition, PLEXIGLAS resin, which is commercially available in pellet form, was pulverized into a powder with a hammermill and then applied and baked in the same manner as detailed above. The composition did not coalesce. The film had a rough sandpaper appearance and texture. The individual powder particles were still visible with the naked eye.

## Claims

1. A powder coating composition comprising a polymeric binder and greater than 40 percent by weight of a coalescing additive component comprising at least one coalescing agent which is a solid at ambient temperature, the coalescing additive component being adapted to promote flow and fusion of the binder into a substantially coalesced film with the application of heat and be substantially volatilized from the film during coalescence; the percentage being based on the total weight of the binder and the coalescing component of the composition.

2. The coating composition of claim 1 additionally comprising at least one adjuvant resin which is different from the binder and is adapted to modify the properties of the binder.

3. The coating composition of claim 1 wherein the binder is a fluorocarbon polymer.

4. The coating composition of claim 2 wherein the binder is a fluorocarbon polymer.

5. The coating composition of claim 4 wherein the adjuvant resin is an acrylic resin.

6. The coating composition of claim 5 wherein the composition comprises from about 5 percent to about 85 percent by weight of fluorocarbon polymer and from about 15 percent to about 95 percent by weight of acrylic resin, the percentages based on the total weight of fluorocarbon and acrylic resin.

7. The coating composition of claim 6 wherein the composition comprises from about 40 percent by weight to about 85 percent by weight of fluorocarbon polymer and from about 15 percent to about 60 percent by weight of acrylic resin.

8. The coating composition of claim 4 wherein the fluorocarbon polymer is selected from polyvinyl fluorides, polyvinylidene fluorides, vinyl fluoride copolymers and vinylidene fluoride copolymers.

9. The coating composition of claim 8 wherein the fluorocarbon polymer is polyvinylidene fluoride.

10. The coating composition of claim 5 wherein the acrylic resin is a thermoplastic acrylic resin.

11. The coating composition of claim 5 wherein the acrylic resin is a thermosetting acrylic resin.

12. The coating composition of claim 10 wherein the acrylic resin is a methyl methacrylate ethyl acrylate copolymer.

13. The coating composition of claim 1 wherein the coalescing additive component comprises a mixture of coalescing agents.

14. The coating composition of claim 1 wherein the coalescing additive component is present in an amount of at least 50 percent by weight.

15. The coating composition of claim 1 wherein the coalescing component is present in an amount ranging from about 60 percent by weight to about 90 percent by weight.

16. The coating composition of claim 1 wherein the coalescing component comprises solid dimethyl isophthalate.

17. The coating composition of claim 1 additionally comprising a pigment.